Europäisches Patentamt

European Patent Office

Office européen des brevets

(11) Veröffentlichungsnummer: **0 283 462**
**A2**

(12) **EUROPÄISCHE PATENTANMELDUNG**

(21) Anmeldenummer: **88890033.9**

(22) Anmeldetag: **17.02.88**

(51) Int. Cl.⁴: **B 23 Q 7/04**

(30) Priorität: **18.02.87 AT 352/87**

(43) Veröffentlichungstag der Anmeldung:
**21.09.88 Patentblatt 88/38**

(84) Benannte Vertragsstaaten: **CH DE GB IT LI**

(71) Anmelder: **MASCHINENFABRIK HEID
AKTIENGESELLSCHAFT
Ernstbrunner Strasse 31-33
A-2000 Stockerau (AT)**

(72) Erfinder: **Holy, Franz
Dr.Adolf Schärfstrasse 3
A-2000 Stockerau (AT)**

**List, Walter
Teichweg 4
A-4470 Enns (AT)**

(74) Vertreter: **Müllner, Erwin, Dr. et al
Patentanwälte Dr. Erwin Müllner Dipl.-Ing. Werner
Katschinka Postfach 159 Weihburggasse 9
A-1010 Wien (AT)**

(54) **Greifer für Werkstücke, Spannpaletten, Spannmittel od.dgl.**

(57) Es ist Aufgabe der Erfindung, einen Greifer für Werkstük-ke, Spannpaletten, Spannmittel od.dgl., insbesondere zur Verwendung bei Drehmaschinen, zu schaffen, der sich bei Werkstücken sowohl für Wellenteile als auch für Futterteile eignet. Dies wird dadurch erreicht, daß der um eine waagrechte Drehachse (4) drehverstellbare Greiferkopf (3) zusätzlich um eine senkrechte Achse (6) um 90° schwenkbar ist. Die waagrechte Drehachse (4) läßt sich sowohl parallel zur Drehachse (8) der Drehmaschine einstellen, was für Wellenteile günstig ist, als auch normal dazu (Position 4'), was für Futterteile günstig ist.

Fig. 1

EP 0 283 462 A2

**Beschreibung**

Greifer für Werkstücke, Spannpaletten, Spannmittel od.dgl.

Die Erfindung betrifft einen Greifer für Werkstücke, Spannpaletten, Spannmittel od.dgl., der einen um eine waagrechte Drechachse drehverstellbar gelagerten Greiferkopf mit einer odervorzugsweise zwei Spanneinrichtungen aufweist, wobei durch jede Spanneinrichtung Backen in mindestens zwei Spannebenen normal zur waagrechten Drehachse betätigbar sind.

Solche Greifer werden z.B. bei Drehmaschinen und Bearbeitungszentren eingesetzt. Sie dienen dazu, Werkstücke automatisch zu wechseln, d.h. das fertig bearbeitete Werkstück abzulegen und das unbearbeitete Werkstück einzuspannen.

Um diese beiden Vorgänge möglichst rasch durchzuführen, sind üblicherweise am Greiferkopf zwei Spanneinrichtungen vorgesehen, die gemeinsam um die waagrechte Drehachse schwenkbar sind, und zwar derart, daß durch die Schwenkbewegung eine Spanneinrichtung genau die Lage einnimmt, die die andere Spanneinrichtung vorher gehabt hat. Um ein Werkstück zu wechseln, wird ein unbearbeitetes Werkstück von einer Spanneinrichtung aufgenommen, dann fährt der Greifer mit der leeren Spanneinrichtung zum bearbeiteten Werkstück und diese nimmt es auf; nun folgt die Schwenkbewegung um die waagrechte Drehachse, sodaß das unbearbeitete Werkstück die Lage einnimmt, die das bearbeitete eben gehabt hat, und eingespannt werden kann. Anschließend fährt der Greifer aus der Maschine und legt das bearbeitete Werkstück ab.

Je nach der Form der zu bearbeitenden Werkstücke werden unterschiedliche Greifer benötigt: für Futterteile braucht man sogenannte Futterteilgreifer und für Wellenteile sogenannte Wellenteilgreifer.

Unter Futterteil versteht man ein Werkstück, das relativ kurz ist, aber einen großen Durchmesser haben kann. (Der maximal mögliche Durchmesser wird von der Drehmaschine bestimmt.) Für Futterteile ist es vorteilhaft, wenn die Drehachse des Greiferkopfes normal zur Drehachse der Drehmaschine ist, damit bei der Schwenkbewegung nicht zuviel Platz benötigt wird. Es sind zweckmäßigerweise drei Backen vorhanden, die das Futterteil entland seines Umfangs spannen (z.B. ein Dreibackenfutter). Solch ein Futterteilgreifer ist beispielsweise in der DE-AS 24 44 124 beschrieben.

Ein Greifer der eingangs genannten Art ist aus der DE-OS 34 46 702 bekannt. Es handelt sich dabei um einen Wellenteilgreifer. Unter Wellenteil versteht man ein Werkstück, das einen relativ kleinen Durchmesser hat, aber dafür große Länge (maximal Spitzenweite der Drehmaschine) aufweist. Für Wellenteile soll die Drehachse des Greiferkopfes parallel zur Drehachse der Drehmaschine sein, damit die Schwenkbewegung nicht zuviel Platz benötigt. Die Welle wird von der Seite gefaßt, sodaß zwei gegenüberliegende Greiferarme benötigt werden. Zumindest bei längeren Wellen sind jedoch zwei Spannebenen notwendig, sodaß insgesamt vier Greiferarme pro Spanneinrichtung notwendig sind.

Obwohl beide Arten von Greifern bekannt sind, gibt es bisher noch keine Greifer, die beide Betriebsarten ausführen können, ohne daß aufwendige, händisch durchzuführende Umbauarbeiten notwendig wären. Es ist mit den bekannten Greifern daher eine flexible Fertigung, wo unterschiedliche Teile in beliebiger Reihenfolge hergestellt werden, nicht rationell möglich.

Es ist Aufgabe der vorliegenden Erfindung, einen Greifer zu schaffen, der sich sowohl als Futterteilgreifer als auch als Wellenteilgreifer eignet, wobei die Umstellung zwischen den beiden Betriebsarten möglichst einfach und automatisierbar sein soll. Dabei sollen nicht nur Werkstücke (Futter- oder Wellenteile), sondern auch Spannpaletten, Spannmittel, Backen von Drehfuttern. Lünetten und reitstockseitige Einsätze (Rollkörner, Futter...) gewechselt werden können.

Diese Aufgabe wird erfindungsgemäß dadurch gelöst, daß der Greiferkopf samt waagrechter Drehachse zusätzlich um eine senkrechte Achse um 90° schwenkbar ist.

Durch die zusätzliche senkrechte Achse kann also die waagrechte Drehachse sowohl parallel als auch normal zur Drehachse der Drehmaschine eingestellt werden, sodaß sich der Greifer sowohl für Futterteile als auch für Wellenteile eignet. Es müssen lediglich gegebenenfalls die Backen getauscht werden, um den Greifer umzurüsten, falls andere werkstückspezifische Backen benötigt werden. In der Betriebsart "Futterteile" wird nur eine der beiden Spannebenen verwendet. Die Schließkraft der zweiten Spannebene kann gegebenenfalls, wie weiter unten beschrieben, mitverwendet werden.

Es ist zweckmäßig, daß zwei Spanneinrichtungen vorgesehen sind, die in bezug auf die waagrechte Drehachse etwa einen Winkel von 90° zueinander aufweisen. Diese Anordnung nützt den vorhandenen Platz optimal aus. Eine Anordnung, wo die beiden Spanneinrichtungen gegenüber vorgesehen sind, wäre nicht möglich, weil ja Wellenteile, die parallel zur waagrechten Drehachse liegen, mit der Befestigung der Drehachse kollidieren würden. Diese Maßnahme ist aus der DE-OS 33 29 619 bereits bekannt.

Der Antrieb der beiden Spannebenen muß eine unabhängige Bewegung der Backen der beiden Spannebenen zulassen, weil ja der Durchmesser einer Welle nicht auf ihrer gesamten Länge konstant sein muß. Weiters muß die Bewegung der Backen jeder Spannebene stets zentrisch sein. Schließlich soll es möglich sein, die Lage der Backen festzustellen, damit erkannt werden kann, ob das Werkstück tatsächlich von den Backen erfaßt worden ist.

Dies wird gemäß einer Weiterbildung der Erfindung dadurch gelöst, daß der Antrieb der beiden Spannebenen der (jeder) Spanneinrichtung jeweils durch zwei gegengleich mit Druck beaufschlagbare Zylinder, die über ein Ritzel miteinander synchronisiert sind, erfolgt, sodaß sie sich stets gegenläufig bewegen, wobei das Ritzel vorzugsweise als Positionsgeber dient.

Die Zylinder weisen für den Eingriff des Ritzels natürlich eine entsprechende Zahnung auf. Durch das Ritzel wird damit eine exakt gegenläufige Bewegung der Zylinder erzwungen. Die Stellung des Ritzels ist zugleich ein Maß für die Position der Backen. Läßt man z.B. das Ritzel ein Potentiometer antreiben, so erhält man ein elekrisches Analogsignal, das ein Maß für die Position der Greiferarme ist.

Es ist gerade im Rahmen der vorliegenden Erfindung wichtig, daß die Greiferarme einfach getauscht werden können, weil ja derselbe Greifer sowohl für Futterteile als auch für Wellenteile verwendbar ist. Dies wird gemäß einem weiteren Merkmal der Erfindung dadurch erreicht, daß die Zylinder der (jeder) Spanneinrichtung in einer Zylinderplatte untergebracht sind und Führungselemente, auf denen die werkstückorientierten Backen befestigt sind, in Führungen einer Backenführungsplatte, die mit der Zylinderplatte lösbar verbunden ist, geführt sind, wobei die Führungselemente mit den Zylindern kinematisch verbunden sind. Es wird also erfindungsgemäß die Trennstelle zwischen die Zylinderplatte und die Backenführungsplatte gelegt. Es wird daher - will man die Backen tauschen - die Backenführungsplatte samt Führungselementen und darauf befestigten werkstückspezifischen Bakken getauscht. Dies hat den Vorteil, daß durch denselben Antrieb nicht nur zwei Backen die einander gegenüberliegen und gegensinnig bewegbar sind, angetrieben werden können, sondern auch - was bei Futterteilen wesentlich ist - z.B. drei Greiferarme bzw. Backen, die gegeneinander jeweils einen Winkel von 120° einschließen und zentrisch gegeneinander bewegbar sind.

Es wäre möglich, die kinematische Verbindung über das Ritzel zu realisieren. Dies würde aber einen Kraftverlauf 2 Zahnstangen (nämlich die Kolben)-Ritzel-2 Zahnstangen (nämlich die Führungselemente) bedeuten, welcher ungünstig ist. Es ist daher vorzugsweise die kinematische Verbindung durch mit den Zylindern verbundene Mitnahmebolzen, die durch entsprechende Schlitze in der Zylinderplatte und der Backenführungsplatte ragen und in entsprechende Ausnehmungen in den Führungselementen eingreifen, gebildet. Auf diese Weise hat das Ritzel nur ausgleichende Wirkung; es muß nur die Differenzkräfte der Zylinder bzw. die unterschiedlichen Reibungskräfte aufnehmen.

Die Backenführungsplatte könnte im einfachsten Fall auf die Zylinderplatte aufgeschraubt sein. Dann ist aber ein automatischer Wechsel kaum möglich.

Für einen automatischen Wechsel ist es zweckmäßig, daß die lösbare Verbindung durch auf der Backenführungsplatte fest angebrachten Hakenbolzen und in der Zylinderplatte verschiebbare Stößel gebildet ist, daß jeder Stößel in Richtung Ausnehmung des Hakenbolzens, wenn dieser in eine entsprechende Bohrung der Zylinderplatte eingesetzt ist, passiv, z.B. durch eine Feder, vorgespannt ist und daß er aktiv, z.B. durch einen Hydraulikkolben, in die entgegengesetzte Richtung verschiebbar ist.

Da es wesentlich mehr Backenführungsplatten als Zylinderplatten gibt, ist es sinnvoll, die Verbindungselemente der Backenführungsplatten möglichst einfach zu machen. Hier weisen sie lediglich einen Hakenbolzen auf. Unter Hakenbolzen wird ein Bolzen verstanden, der eine Ausnehmung (z.B. eine Nut in Querrichtung) aufweist, sodaß er hakenförmig ist. Dieser Hakenbolzen gelangt beim Aufsetzen der Backenführungsplatte in eine entsprechende Bohrung der Zylinderplatte, in der er durch einen Stößel, der in die Ausnehmung eingreift, festgehalten wird. Dieser Stößel wird durch eine Feder in die Ausnehmung gedrückt; hydraulisch wäre es ungünstig, weil dann nach dem Abschalten der Maschine eine sichere Verbindung nicht mehr gewährleistet wäre. Hydraulisch erfolgt das Wegschieben des Stößels, damit die Backenführungsplatte abgenommen werden kann.

Wenn die kinematische Verbindung, wie oben beschrieben, durch Mitnahmebolzen, die in Ausnehmungen der Führungselemente eingreifen, gebildet ist, müssen beim Aufsetzen der Backenführungsplatte die Führungselemente an den Stellen stehen, die der Lage der Mitnahmebolzen entsprechen. Das Aufsetzen und Abnehmen der Backenführungsplatte erfolgt zweckmäßigerweise immer in derselben Endlage der Mitnahmebolzen (das muß nicht unbedingt der mechanische Anschlag sein). Nach dem Abnehmen der Backenführungsplatte müssen die Führungselemente verriegelt werden, um ein ungewolltes Verschieben zu verhindern. Dies geschieht bei einer Backenführungsplatte mit parallelen Führungen, in denen Führungselemente geführt sind, die direkt über die Mitnahmebolzen mit den Zylindern verbunden sind, zweckmäßigerweise dadurch, daß jede Führung am Boden in Querrichtung eine Nut aufweist, die mit einer Nut im Führungselement fluchtet, wenn dieses in einer Endstellung ist, daß der Mitnahmebolzen ebenfalls eine entsprechende Nut aufweist, dessen Tiefe geringer als die Tiefe der Nut im Führungselement, jedoch größer als die Tiefe der Nut in der Führung ist und daß in der Nut des Führungselementes ein Verriegelungsbolzen vorgesehen ist, der in Richtung zum Boden der Führung vorgespannt ist und eine Dicke aufweist, die etwa der Tiefe der Nut des Mitnahmebolzens entspricht.

Bei abgenommener Backenführungsplatte wird der Verriegelungsbolzen, z.B. durch eine Feder, in die Nut der Führung gedrückt; da er dicker ist als diese, ragt er auch in die Nut des Führungselements, sodaß dieses gegen Verschieben gesichert ist. Wird die Backenführungsplatte aufgesetzt, so wird der Verriegelungsbolzen durch die Nut des Mitnahmebolzens aus der Nut der Führung herausgedrückt, sodaß das Führungselement verschiebbar ist.

Es ist besonders zweckmäßig, wenn die nebeneinander liegenden Zylinder der beiden Spannebenen gleichsinnig mit Druck beaufschlagbar sind. Dies hat den Vorteil, daß - wenn nur eine Spannebene benötigt wird, also bei Futterteilen - die beiden Zylinder zusammenarbeiten können und die eine Spannebene von beiden Zylindern betrieben wird. Die anderen Zylinder arbeiten über die Ritzel mit.

Es ist in diesem Fall zweckmäßig, wenn für eine zentrische Mehrpunktspannung die an den in der Zylinderplatte nebeneinander liegenden Zylindern der beiden Spannebenen angebrachten Mitnahme-

bolzen in Ausnehmungen einer Schieberplatte der Backenführungsplatte ragen, wobei die Schieberplatte über eine Kulisse ihre Längsbewegung in eine Drehbewegung einer Zentralscheibe umsetzt, welche auf bekannte Art Hebel oder Backen zentrisch antreibt.

Anhand der beiliegenden Zeichnungen wird die Erfingung näher erläutert. Es zeigt:

Fig. 1 schematisch das Prinzip des erfindungsgemäßen Greifers an einer Schrägbettdrehmaschine in Draufsicht;

Fig. 2 einen erfindungsgemäßen Greiferkopf in Richtung der waagrechten Drehachse;

Fig. 3 denselben in Seitenansicht;

Fig. 4 eine erfindungsgemäße lösbare Verbindung zwischen Zylinderplatte und Backenführungsplatte;

Fig. 5 einen Ausschnitt aus Fig. 2, nämlich die Verriegelung eines Führungselements, in vergrößertem Maßstab;

Fig. 6 einen Schnitt entlang der Linie VI-VI in Fig. 5, was einem Ausschnitt aus Fig. 3 in vergrößertem Maßstab entspricht;

Fig. 7 eine Ausführungsform einer zentralen Dreipunktspannung;

Fig. 8 eine andere Ausführungsform einer zentralen Dreipunktspannung; und

Fig. 9 und 10 die Funktionsweise des Greifers bei Futter- bzw. Wellenteilen.

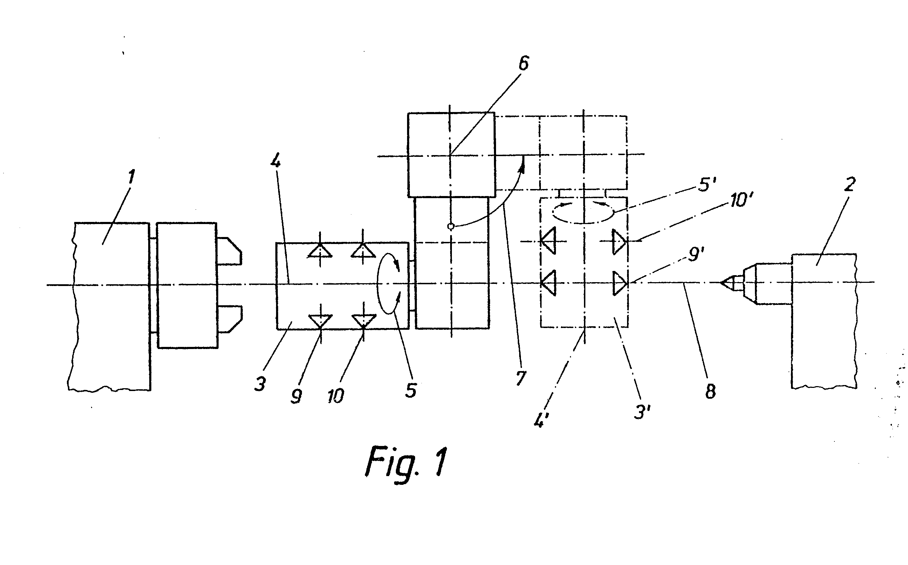

In Fig. 1 ist eine Schrägbettdrehmaschine durch einen Spindelstock 1 und einen Reitsock 2 angedeutet. Dazwischen ist ein erfindungsgemäßer Greifer angedeutet. Dieser hat einen Greiferkopf 3, der um eine waagrechte Drehachse 4 drehverstellbar ist (Pfeil 5). Dieser Greiferkopf 3 ist samt der waagrechten Drehachse 4 zusätzlich um eine senkrechte Achse 6 (die in der Fig. 1 nur als Punkt erscheint) um 90° schwenkbar (Pfeil 7).

In Fig. 1 sind beide Positionen des Greiferkopfes eingezeichnet, eine mit durchgezogenen Linien und eine mit strichpunktierten Linien. In der letzteren Position sind dieselben Bezugszeichen, jedoch gestrichen, eingetragen.

In der mit durchgezogenen Linien dargestellten Position ist die waagrechte Drehachse 4 des Greiferkopfes 3 parallel zur Drehachse 8 der Drehmaschine. Diese Position ist für Wellenteile geeignet.

In der mit strichpunktierten Linien dargestellten Position ist die waagrechte Drehachse 4' des Greiferkopfes 3' normal zur Drehachse 8 der Drehmaschine. Diese Position ist für Futterteile geeignet.

Der Greifer ist selbstverständlich horizontal und vertikal verfahrbar, wie das beim Stand der Technik üblich ist. Um Futterteile zu wechseln, müßte der Greifer, wie er in Fig. 1 dargestellt ist, natürlich zuerst in Richtung Spindelstock verfahren werden.

In Fig. 1 sind auch Spannebenen 9, 10 angedeutet, wo das Werkstück gefaßt werden kann. Für Wellenteile werden beide Spannebenen 9, 10 verwendet, um die Welle zuverlässig zu fassen. Für Futterteile wird nur die Spannebene 9 benötigt. Zur Erhöhung der Schließkraft kann gegebenenfalls die Spannebene 10' mitverwendet werden.

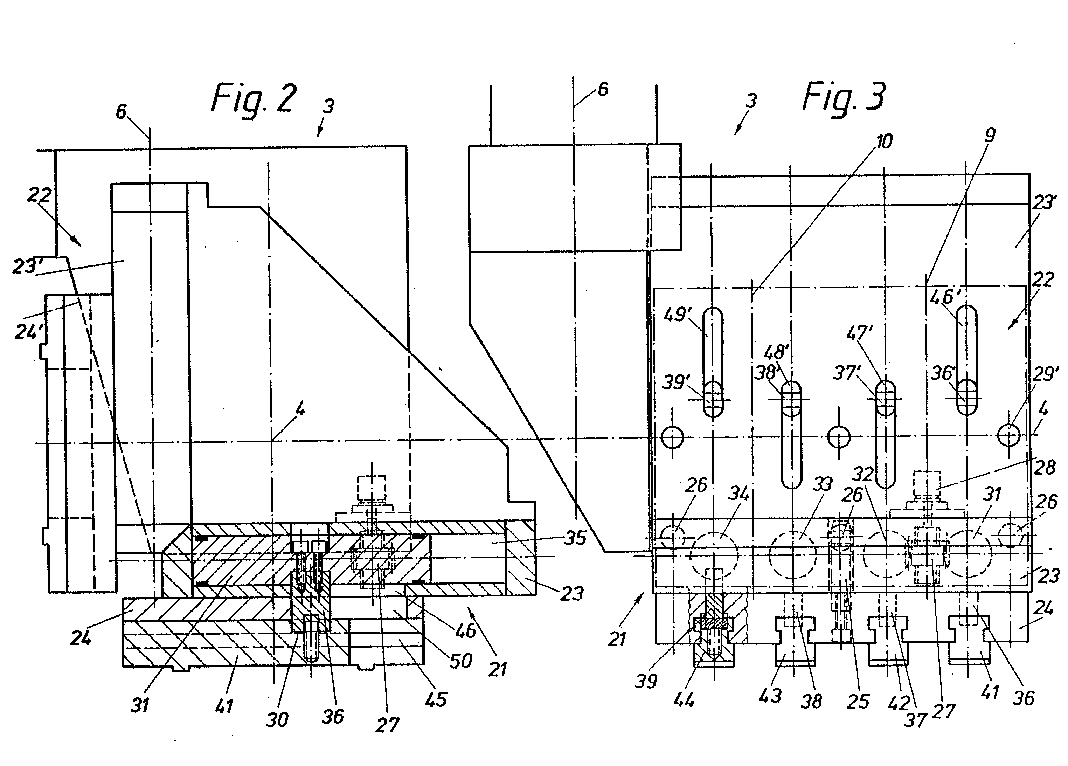

Anhand der Fig. 2 und 3 wird der erfindungsgemäße Greiferkopf näher beschrieben. Wie schon bei Fig. 1 erwähnt, ist er um eine waagrechte Drehachse 4 und eine senkrechte Achse 6 drehverstellbar. Der Greiferkopf weist zwei Greifeinrichtungen 21, 22 auf, die gegeneinander in bezug auf die waagrechte Drehachse 4 um 90° versetzt sind. Diese beiden Greifeinrichtungen sind identisch aufgebaut; in den Fig. 2 und 3 ist daher die Greifeinrichtung 22 nur angedeutet. Soweit Bezugszeichen eingetragen sind, sind dieselben wie für die Greifeinrichtung 21, jedoch getrichen, verwendet.

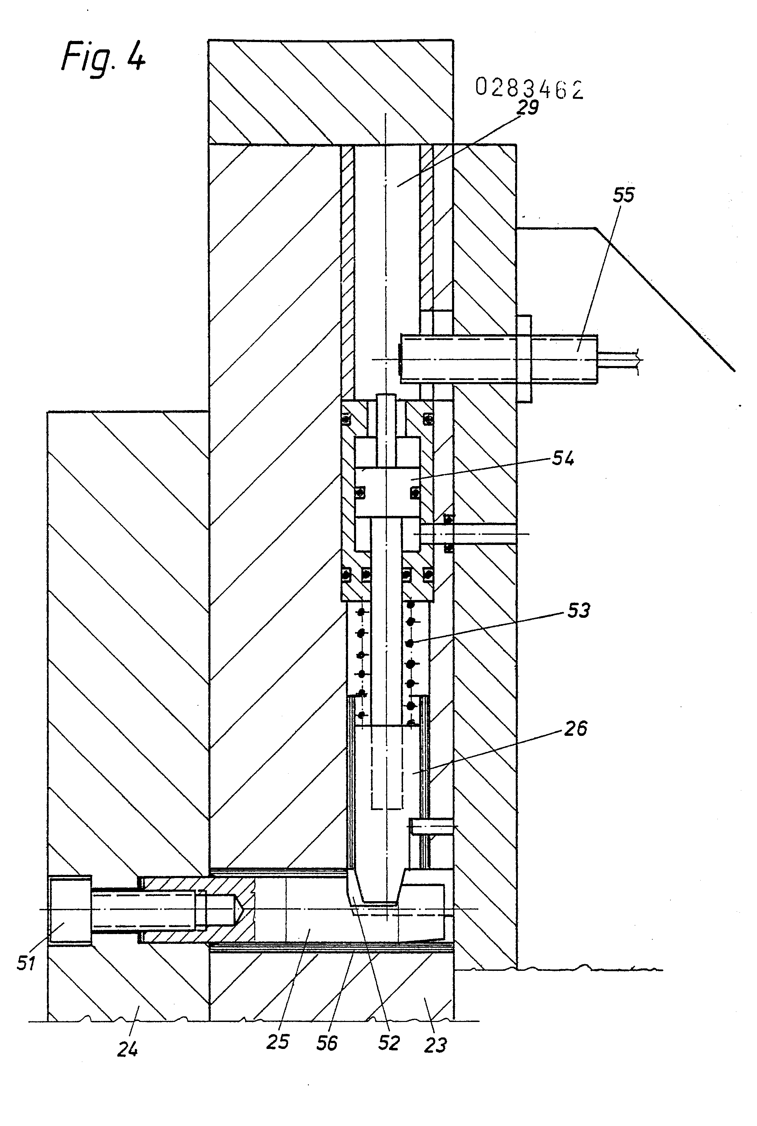

Die Greifeinrichtung 21 besteht aus einer Zylinderplatte 23 und einer Backenführungsplatte 24 (In Fig. 3 ist die Backenführungsplatte der Greifeinrichtung 22 abgenommen.) Diese beiden Platten sind lösbar miteinander verbunden. Die Verbindung ist in Fig. 4 detailliert dargestellt; hier ist sie durch einen Hakenbolzen 25 und einen in einer Bohrung 29 geführten Stößel 26 nur angedeutet.

Die Zylinderplatte 23 enthält den gesamten Antrieb für die Backen, die das Werkstück fassensollen. Will man andere Backen verwenden, braucht nur die Backenführungsplatte 24 samt Backen getauscht werden.

Wie bereits bei Fig. 1 erwähnt, sind bei jeder Spanneinrichtune 21, 22 zwei Spannebenen 9, 10 vorgesehen. Für jede Spannebene 9, 10 sind zwei zweiseitig beaufschlagbare Hydraulikzylinder 31, 32 bzw. 33, 34 vorgesehen, die in entsprechenden Bohrungen der Zylinderplatte 23 verschiebbar sind. Die einzige sichtbare Bohrung ist in Fig. 2 mit 35 bezeichnet. Die Hydraulikzylinder 31, 32 bzw. 33, 34 weisen an den einander zugekehrten Längsseiten eine Zahnung auf, in die ein Ritzel eingreift. (In Fig. 3 ist nur ein Ritzel 27 zwischen den Zylindern 31, 32 dargestellt.) Dadurch wird eine exakt gegenläufige Bewegung der Zylinder 31, 32 bzw. 33, 34 jeder Spannebene bewirkt. Die Zylinder 31, 32 bzw. 33, 34 werden im Betrieb natürlich jeweils gegengleich mit Druck beaufschlagt.

Mit dem Ritzel 27 ist ein Potentiometer 28 verbunden. Dadurch wird eine Wegmessung der Backen, die von den Zylindern angetrieben werden, ermöglicht.

Die Backenführungsplatte 24 weist vier T-Führungen auf, in denen vier Führungselemente 41-44 verschiebbar geführt sind. (Es ist nur eine Führung in Fig. 2 sichtbar, diese ist mit 45 bezeichnet.) Auf diesen Führungselementen werden dann die Backen (nicht dargestellt) befestigt (z.B. angeschraubt), die das Werkstück fassen. Diese müssen natürlich entsprechend gekröpft sein, damit sie das Werkstück genau in der Spannebene 9 bzw. 10 fassen.

Um die gegenläufige Bewegung der Zylinder 31-34 auf die Führungselemente 41-44 zu übertragen, sind in der Zylinderplatte 23 vier Schlitze 46-49 vorgesehen, durch die Mitnahmebolzen 36-39 ragen. Diese Mitnahmebolzen 36-39 sind mit den Zylindern 31-34 fest verbunden und machen daher ihre Bewegung mit.

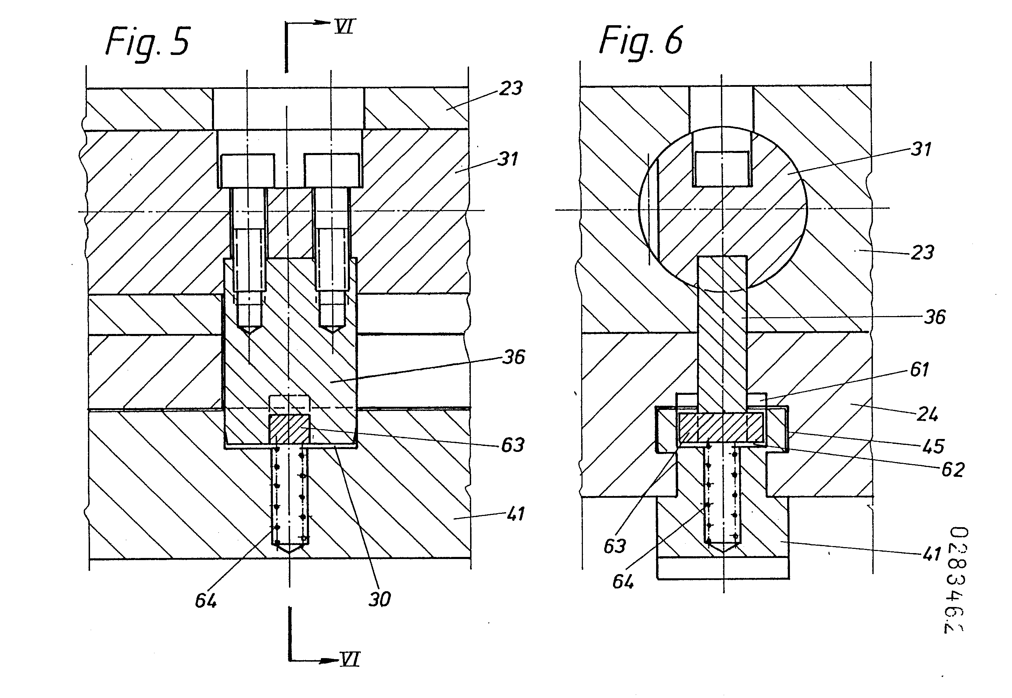

In der Backenführungsplatte 24 sind entsprechend ebenfalls vier Schlitze vorgesehen. Der einzige sichtbare Schlitz ist in Fig. 2 mit 50 bezeichnet. Wenn die Backenführungsplatte 24 auf der Zylinderplatte 23 befestigt ist, wie das in Fig. 2 und 3 dargestellt ist, so ragen die Mitnahmebolzen 36-39 durch die Schlitze 46-49 bzw. 50 in entsprechende Ausnehmungen der Führungselemente. (Die einzige sichtbare Ausnehmung ist in Fig. 2 mit 30 bezeichnet.) Bei dem Mitnahmebolzen 36 in Fig. 2 und 39 in Fig. 3 ist eine Verriegelung angedeutet, die in den Fig. 5, 6 genauer dargestellt ist.

Das Kippmoment der relativ weit ausladenden (nicht dargestellten) Backen wird bei der beschriebenen Konstruktion von den Führungselementen 41-44 und der Backenführungsplatte 24 aufgenommen. Diese müssen daher gehärtet sein. Auf die Zylinder 31-34 selbst wirkt nur ein geringes Kippmoment, weil die Mitnahmebolzen 36-39 relativ kurz sind. Die Zylinderplatte 23 kann daher aus Aluminium ausgeführt werden, was aus Gewichtsgründen günstig ist.

Für die Betätigung der Zylinder 31-34 genügen zwei Hydraulikleitungen. Jeder Zylinder ist zweiseitig beaufschlagbar und wird an diese beiden Hydraulikleitungen angeschlossen, wobei die entsprechenden Kammern der Zylinder 31, 32 bzw. 33, 34 jeweils einer Spannebene 9, 10 vertauscht an die Hydraulikleitungen angeschlossen werden, um eine gegenläufige Bewegung zu erzielen. Es stört dabei nicht, daß die beiden Spannebenen gemeinsam versorgt werden, weil ja nur die Lage, nicht die Kraft der Backen in jeder Spannebene unabhängig sein muß.

In Fig. 4 ist die Verbindung der Zylinderplatte 23 mit der Backenführungsplatte 24 gezeigt. An der Backenführungsplatte 24 ist dabei lediglich in einer geeigneten Bohrung ein Hakenbolzen 25 mit einer Schraube 51 befestigt. Dieser Hakenbolzen paßt in eine Bohrung 56 der Zylinderplatte 23. In die Ausnehmung 52 des Hakenbolzens 25 ragt ein in einer Bohrung 29 geführter Stößel 26 und fixiert dadurch den Hakenbolzen 25 samt Backenführungsplatte 24. Der Stößel 26 wird durch eine Feder 53 gegen den Hakenbolzen gedrückt; durch sein konisches Ende, das gegen das ebenfalls konische vordere Ende (in Fig. 4 rechts) der Ausnehmung 52 drückt, wird dadurch die Backenführungsplatte 24 an die Zylinderplatte 23 gedrückt.

Zum Zurückziehen des Stößels 26 dient ein Hydraulikzylinder 54. Ein Weggeber 55 ist vorgesehen, um festzustellen, ob der Verschluß gerade verriegelt ist oder nicht.

Anhand der Fig. 5 und 6 wird die Verriegelung der Führungselemente beschrieben. Quer zur Richtung der Führung 45 ist in ihrem Boden eine Nut 61 vorgesehen. Das Führungselement 41 hat ebenfalls eine Nut 62, die die gleiche Form, aber eine größere Tiefe hat wie die Nut 61. In der Nut 62 ist ein Verriegelungsstein 63 eingelegt, der durch eine Feder 64 in Richtung Nut 61 gedrückt wird. Wenn der Mitnahmebolzen 36 nicht vorhanden ist - wie das bei abgenommener Backenführungsplatte 24 der Fall ist - wird der Verriegelungsstein, dessen Dicke größer ist als die Tiefe der Nut 61, durch die Feder 64 zum Teil in die Nut 61 gedrückt, zum anderen Teil liegt er in der Nut 62. Eine Verschiebung des Führungselementes 41 ist damit unmöglich.

Wenn die Backenführungsplatte 24 aufgesetzt wird, wird der Verriegelungsstein 63, dessen Dicke kleiner ist als die Tiefe der Nut 62, durch den Mitnahmebolzen 36 vollständig in die Nut 62 gedrückt. Der Mitnahmebolzen hat zum Wegdrücken des Verriegelungssteins 63 eine Nut, deren Abmessungen den Abmessungen des Verriegelungssteins 63 entspricht; die Nut ist daher, wie in Fig. 5 zu sehen, zur Gänze vom Verriegelungsstein 63 ausgefüllt. Wenn der Verriegelungsstein aus der Nut 61 herausgedrückt ist, wie das bei aufgesetzter Backenführungsplatte 24 der Fall ist, läßt sich das Führungselement 41 natürlich verschieben.

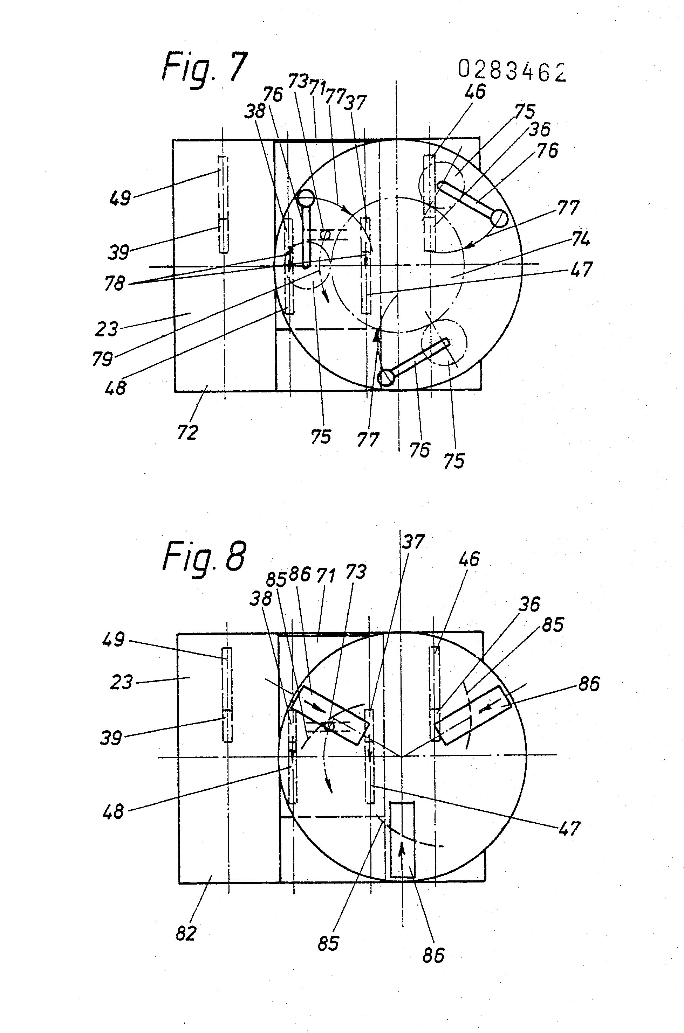

Anhand der Fig. 7 und 8 wird gezeigt, wie eine zentrische Mehrbackenführung verwirklicht werden kann. Zu diesem Zweck greifen die mittleren Mitnahmebolzen 37, 38, die gleichsinnig mit Druck beaufschlagt werden, in eine Schieberplatte 71 ein, die Teil der aufgesetzten Backenführungsplatte 72 bzw. 82 ist. Dabei wirkt aber nicht nur die Kraft der mit den Mitnahmebolzen 37, 38 verbundenen Zylinder 32, 33 auf die Schieberplatte, sondern auch die der äußeren Zylinder 31 und 34, weil sie ja über Ritzel mit den mittleren Zylindern 32 und 33 verbunden sind. Die Schieberplatte 71 treibt nun gemäß Fig. 7 über eine Kulisse 73 eine Zentralscheibe 74 an. Diese Zentralscheibe treibt über eine Außenverzahnung Zahnräder 75 an, die mit Hebeln 76 verbunden sind. Diese Hebel drehen sich in Richtung der Pfeile 77 und klemmen ein Werkstück, wenn sich die mittleren Mitnahmebolzen 37, 38 in Richtung der Pfeile 78, also nach unten bewegen. Die Zentralscheibe 74 dreht sich dabei in richtung des Pfeils 79.

Gemäß Fig. 8 trägt die Zentralscheibe Spannkurven 85, die die Backen 86 antreiben. Die Backen 86 bewegen sich dabei nach innen, wenn sich die mittleren Mitnahmebolzen nach unten bewegen.

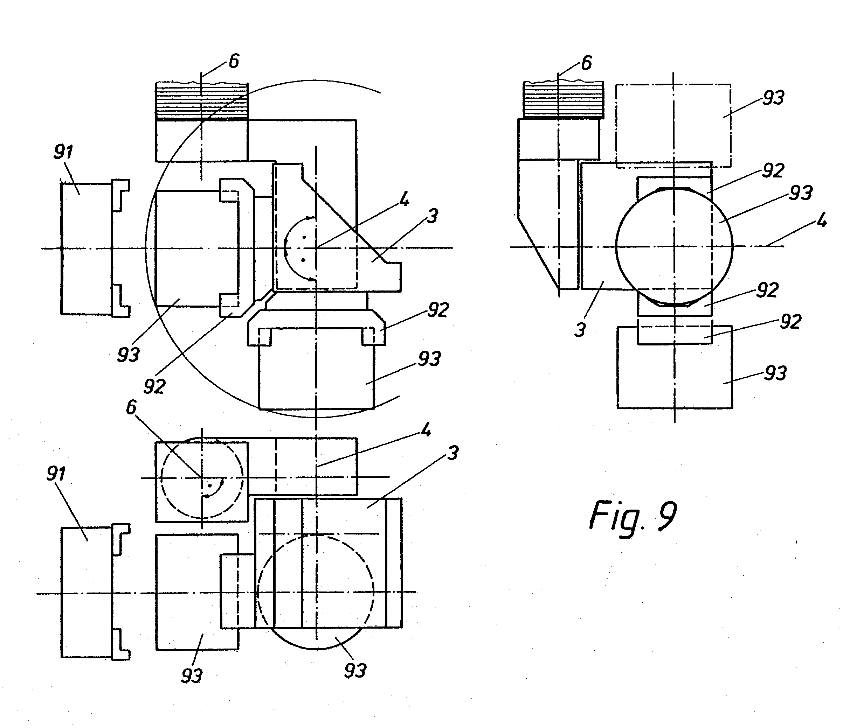

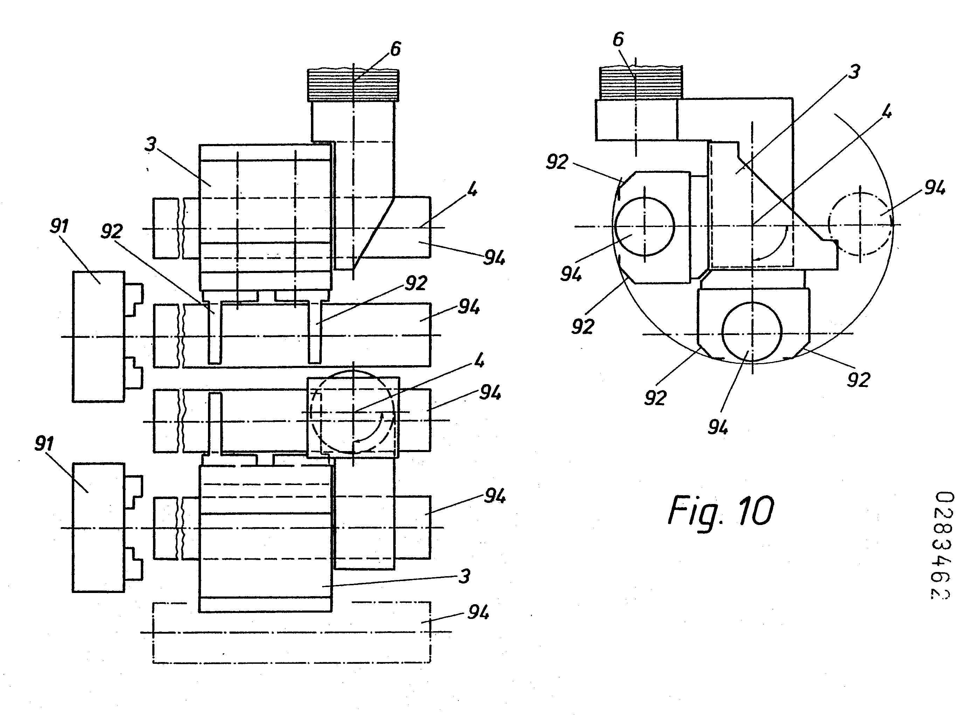

Die Funktionsweise des erfindungsgemäßen Greifers ist für Futterteile in fig. 9 und für Wellenteile in Fig. 10 illustriert. Beide Figuren zeigen den Greifer in Grund-, Auf- und Seitenriß, wobei die Drehmaschine lediglich durch ein Drehfutter 91 angedeutet ist. Die Backen sind mit 92, das Werkstück mit 93 (Futterteil) bzw. 94 (Wellenteil) bezeichnet. Die restlichen Teile haben dieselben Bezugszeichen wie oben.

**Patentansprüche**

1. Greifer für Werkstücke, Spannpaletten, Spannmittel od.dgl., der einen um eine waagrechte Drehachse (4) drehverstellbar gelagerten Greiferkopf (3) mit einer oder vorzugsweise zwei Spanneinrichtungen (21,22) aufweist, wobei durch jede Spanneinrichtung (21,22) Backen in mindestens zwei Spannebenen (9,10) normal zur waagrechten Drehachse (4) betätigbar sind, dadurch gekennzeichnet, daß der Greiferkopf (3) samt waagrechter Drehachse (4) zusätzlich um eine senkrechte Achse (6) um 90° schwenkbar ist. (Fig. 1, 2)

2. Greifer nach Anspruch 1, dadurch gekennzeichnet, daß zwei Spanneinrichtungen (21, 22) vorgesehen sind, die in bezug auf die waagrechte Drehachse (4) etwa einen Winkel von 90° zueinander aufweisen. (Fig. 2)

3. Greifer nach Anspruch 1 oder 2, dadurch gekennzeichnet, daß der Antrieb der beiden Spannebenen (9, 10) der (jeder) Spanneinrichtung (21, 22) jeweils durch zwei gegengleich mit Druck beaufschlagbare Zylinder (31, 32; 33, 34), die über ein Ritzel (27) miteinander synchronisiert sind, erfolgt, sodaß sie sich stets gegenläufig bewegen, und daß das Ritzel (27) vorzugsweise als Positionsgeber dient (Potentiometer 28). (Fig. 3)

4. Greifer nach Anspruch 3, dadurch gekennzeichnet, daß die Zylinder (31-34) der (jeder) Spanneinrichtung (21, 22) in einer Zylinderplatte (23) untergebracht sind und Führungselemente (41-44), auf denen die werkstückorientierten Backen befestigt sind, in Führungen (45) einer Backenführungsplatte (24), die mit der Zylinderplatte (23) lösbar verbunden ist, geführt sind, wobei die Führungselemente mit den Zylindern kinematisch verbunden sind. (Fig. 2, 3)

5. Greifer nach Anspruch 4, dadurch gekennzeichnet, daß die kine matische Verbindung durch mit den Zylindern (31-34) verbundene Mitnahmebolzen (36-39), die durch entsprechende Schlitze (46-49; 50) in der Zylinderplatte (23) und der Backenführungsplatte (24) ragen und in entsprechende Ausnehmungen (30) in den Führungselementen (41-44) eingreifen, gebildet ist. (Fig. 2, 3)

6. Greifer nach Anspruch 4 oder 5, dadurch gekennzeichnet, daß die lösbare Verbindung durch auf der Backenführungsplatte (24) fest angebrachte Hakenbolzen (25) und in der Zylinderplatte (23) verschiebbare Stößel (26) gebildet ist, daß jeder Stößel (26) in Richtung Ausnehmung (52) des Hakenbolzens (25), wenn dieser in eine entsprechende Bohrung (29) der Zylinderplatte (23) eingesetzt ist, passiv, z.B. durch eine Feder (53), vorgespannt ist und daß er aktiv, z.B. durch einen Hydraulikkolben (54), in die entgegengesetzte Richtung verschiebbar ist. (Fig. 4)

7. Greifer nach Anspruch 5 oder 6, dadurch gekennzeichnet, daß die Backenführungsplatte (24) parallele Führungen (45) aufweist, in denen Führungselemente (41-44) geführt sind, die direkt über die Mitnahmebolzen (36-39) mit den Zylindern (31-34) verbunden sind, daß jede Führung (45) am Boden in Querrichtung eine Nut (61) aufweist, die mit einer Nut (62) im Führungselement (41) fluchtet, wenn dieses in einer Endstellung ist, daß der Mitnahmebolzen (36) ebenfalls eine entsprechende Nut aufweist, dessen Tiefe geringer als die Tiefe der Nut (62) im Führungselement (41), jedoch größer als die Tiefe der Nut (61) in der Führung (45) ist und daß in der Nut (62) des Führungselementes (41) ein Verriegelungsbolzen (63) vorgesehen ist, der in Richtung zum Boden der Führung (45) vorgespannt ist und eine Dicke aufweist, die etwa der Tiefe der Nut des Mitnahmebolzens (36) entspricht. (Fig. 2, 3 und 5, 6)

8. Greifer nach Anspruch 5, dadurch gekennzeichnet, daß die nebeneinanderliegenden Zylinder (32, 33) der beiden Spannebenen (9, 10) gleichsinnig mit Druck beaufschlagbar sind. (Fig. 3)

9. Greifer nach Anspruch 8, dadurch gekennzeichnet, daß für ei ne zentrische Mehrpunktspannung die an den in der Zylinderplatte (23) nebeneinanderliegenden Zylindern (32, 33) der beiden Spannebenen (9, 10) angebrachten Mitnahmebolzen (37, 38) in Ausnehmungen einer Schieberplatte (71) der Backenführungsplatte (72 bzw. 82) ragen, wobei die Schieberplatte (71) über eine Kulisse (73) ihre Längsbewegung in eine Drehbewegung einer Zentralscheibe (74) umsetzt, welche auf bekannte Art Hebel (76) oder Backen (86) zentrisch antreibt.

Fig. 1

Fig.2

Fig.3

Fig. 4

0283462

Fig. 5

Fig. 6

Fig. 7

0283462

Fig. 8

0283462

Fig. 9

0283462

Fig. 10